# EUROPEAN PATENT SPECIFICATION

(11) **EP 3 552 911 B1**
(45) Date of publication and mention of the grant of the patent: **09.06.2021**
(21) Application number: 19167270.8
(22) Date of filing: 04.04.2019
(51) Int. Cl.: B60W 60/00, B60W 50/00, B60W 50/08, B60W 50/14, B60W 30/09, B60W 50/029

(54) **APPARATUS AND METHOD FOR PROVIDING SAFETY STRATEGY IN VEHICLE**
VORRICHTUNG UND VERFAHREN ZUR BEREITSTELLUNG EINER SICHERHEITSSTRATEGIE IN EINEM FAHRZEUG
APPAREIL ET PROCÉDÉ POUR FOURNIR UNE STRATÉGIE DE SÉCURITÉ DANS UN VÉHICULE

(30) Priority: 11.04.2018 US 201862655831 P; 29.11.2018 KR 20180151079
(43) Date of publication of application: 16.10.2019
(73) Proprietor: Hyundai Motor Company, Seoul 06797 (KR); Kia Motors Corporation, Seoul 06797 (KR)
(72) Inventor: Choi, Tae Sung, Gyeonggi-do 18280 (KR); Jeong, Jin Su, Gyeonggi-do 18280 (KR); Lee, Seung Yong, Gyeonggi-do 18280 (KR); Yang, Na Eun, Gyeonggi-do 18280 (KR); Chae, Su Hong, Gyeonggi-do 18280 (KR); Jeon, Jae Yong, Gyeonggi-do 18280 (KR)
(74) Representative: Hoffmann Eitle

(56) References cited:
- EP-A1- 3 284 646
- US-A1- 2015 094 899
- US-A1- 2018 088 574

## Description

### CROSS-REFERENCE TO RELATED APPLICATION

This application claims the benefit of and priority to Korean Patent Application No. 10-2018-0151079, filed on November 29, 2018, which claims priority to and the benefit of United States Provisional Patent Application No. 62/655,831, filed on April 11, 2018.

### FIELD

The present invention relates to an apparatus and method for providing a strategy for the maintenance of safety depending on the occurrence of an event.

### BACKGROUND

The statements in this section merely provide background information related to the present disclosure and may not constitute prior art.

With the development of the auto industry, an autonomous system and a driving assistance system which facilitates partially autonomous driving (hereinafter, for convenience of description, both of autonomous driving and driving assistance are referred to as "autonomous driving") have been developed. The autonomous system may provide a variety of functions, for example, setting speed keeping, vehicle-to-vehicle distance keeping, lane keeping, and a lane change. The autonomous system may perform autonomous driving using various devices such as a sensor for sensing environments outside the vehicle, a sensor for sensing information about the vehicle, a global positioning system (GPS), a detailed map, a driver state monitoring system, a steering actuator, an acceleration/deceleration actuator, a communication circuit, and a control circuit (e.g., an electronic control unit (ECU)). The autonomous system may detect a critical situation and may provide a minimum risk maneuver (MRM) when sensing the critical situation.

The autonomous system may predict or detect a critical situation. For example, the critical situation may be predicted or may occur like a bombshell. When the same MRM is consistently provided in response to the critical situation, the safety of a driver may be improved.

US 2018/088574 A1 discloses a control system that is operable to control a vehicle in an autonomous or semi-autonomous mode including a processor that processes data captured by a plurality of exterior sensing sensors. When the control system is operating in the autonomous or semi-autonomous mode and responsive to a determination of an upcoming event that requires the system to hand over control of the vehicle to a driver before the vehicle encounters the event, the control determines (i) a total action time until the vehicle encounters the event, (ii) an estimated time for the driver to take over control and (iii) an estimated handling time for the vehicle to be controlled before the vehicle encounters the event. Responsive to the determinations, the control system (i) allows the driver to take over control of the vehicle or (ii) controls the vehicle to slow down and stop the vehicle before the vehicle encounters the event.

EP 3 284 646 A1 discloses a control system for an autonomous driving vehicle comprising an operation device configured to be operated by a driver; a notification device configured to give notification to the driver; and an electronic control unit. Autonomous driving is performed. When the driver operates the operation device during autonomous driving, autonomous driving is terminated, and vehicle driving is switched to manual driving. Further, when the driver should be requested to terminate autonomous driving during autonomous driving, the notification device is controlled to first notify a request for preparing for manual driving to the driver and then notify a request for terminating autonomous driving to the driver.

US 2015/0094899 A1 discloses a driver assistance system of a vehicle, which is able to control the vehicle at least partially automatically. A method alerts the driver to retake control of the vehicle from the driver assistance system based on the distance between the current location of the vehicle and an end of the autopilot capable route section. An end of an autopilot route section in a route planned for the vehicle is determined and distance information is determined between a current position of the vehicle and the end of the autopilot route section. The distance information is compared to a first and a second threshold value, and a first or a second indication is output as a function thereof.

### SUMMARY

An aspect of the present invention provides an apparatus and method for identifying a critical situation which may occur during autonomous control and providing an MRM suitable for each situation.

According to the present invention an apparatus for providing a safety strategy in a vehicle includes: a sensor configured to obtain sensing information about the outside of the vehicle, a memory storing road information, an output device configured to output a notification, and a control circuit configured to be electrically connected with the sensor, the memory, and the output device. The control circuit is configured to recognize an event associated with a critical situation of the vehicle based on at least a portion of the sensing information or the road information, while performing autonomous control, maintain the autonomous control, output a transition demand using the output device, and control the vehicle according to a predetermined strategy for the critical situation, when the event is a planned event, and immediately output the transition demand and control the vehicle according to the predetermined strategy, when the event is an unplanned event.

According to one aspect, the planned event may be associated with a driving road or a driving lane of the vehicle.

According to one aspect, the unplanned event may be associated with an external object or a failure of an autonomous system of the vehicle.

According to one aspect, the control circuit may be configured to calculate an expected remaining time taken until the event occurs, when the event is the planned event, maintain the autonomous control, when the expected remaining time is greater than the sum of a first time interval and a second time interval, output the transition demand, when the expected remaining time is less than or equal to the sum of the first time interval and the second time interval and is greater than the second time interval, and control the vehicle according to the predetermined strategy, when the expected remaining time is less than or equal to the second time interval.

According to one aspect, the first time interval may be preset.

According to one aspect, the second time interval may be calculated based on a speed of the vehicle.

According to one aspect, the control circuit may be configured to immediately output the transition demand and calculate an expected remaining time taken until the event occurs, when the event is the unplanned event and control the vehicle according to the predetermined strategy together with outputting the transition demand, when the expected remaining time is less than a specified time interval.

According to one aspect, the specified time interval may be calculated based on a speed of the vehicle.

According to one aspect, the control circuit may be configured to immediately control the vehicle according to the predetermined strategy together with outputting the transition demand, when the event is the unplanned event.

According to one aspect, the control circuit may be configured to immediately control the vehicle according to the predetermined strategy together with outputting the transition demand, when the event is an event where a surrounding vehicle cuts in.

According to one aspect, the control circuit may be configured to immediately control the vehicle according to the predetermined strategy together with outputting the transition demand, when the event is a failure of an autonomous system.

According to one aspect, the control circuit may be configured to control the vehicle according to another strategy for the critical situation, when deceleration required to avoid the critical situation is greater in magnitude than a specified value.

According to one aspect, the control circuit may be configured to hand over control authority to a driver of the vehicle, when an input by the driver is received after the transition demand is output.

According to one aspect, the predetermined strategy may include stopping in lane, deceleration in lane, or movement toward a shoulder.

According to the present invention a method for providing a safety strategy in a vehicle includes recognizing an event associated with a critical situation of the vehicle based on at least a portion of sensing information or road information, while performing autonomous control, maintaining the autonomous control, outputting a transition demand, and controlling the vehicle according to a predetermined strategy for the critical situation, when the event is a planned event, and immediately outputting the transition demand and controlling the vehicle according to the predetermined strategy, when the event is an unplanned event.

According to one aspect, the planned event may be associated with a driving road or a driving lane of the vehicle.

According to one aspect, the unplanned event may be associated with an external object or a failure of an autonomous system of the vehicle.

According to one aspect, the controlling of the vehicle when the event is the planned event may include calculating an expected remaining time taken until the event occurs, maintaining the autonomous control, when the expected remaining time is greater than the sum of a first time interval and a second time interval, outputting the transition demand, when the expected remaining time is less than or equal to the sum of the first time interval and the second time interval and is greater than the second time interval, and controlling the vehicle according to the predetermined strategy, when the expected remaining time is less than or equal to the second time interval.

According to one aspect, the controlling of the vehicle when the event is the unplanned event may include immediately outputting the transition demand and calculating an expected remaining time taken until the event occurs and controlling the vehicle according to the predetermined strategy together with outputting the transition demand, when the expected remaining time is less than a specified time interval.

According to one aspect, the controlling of the vehicle when the event is the unplanned event may include immediately controlling the vehicle according to the predetermined strategy together with outputting the transition demand.

Further areas of applicability will become apparent from the description provided herein. It should be understood that the description and specific examples are intended for purposes of illustration only and are not intended to limit the scope of the present invention as defined by the appended claims.

### DRAWINGS

In order that the invention may be well understood, there will now be described various forms thereof, given by way of example, reference being made to the accompanying drawings, in which:
FIG. 1 is a block diagram illustrating a configuration of an apparatus for providing a safety strategy in a vehicle according to one aspect of the present disclosure;
FIG. 2 is a block diagram illustrating a configuration of an apparatus for providing a safety strategy in a vehicle according to one aspect of the present disclosure;
FIG. 3 is a drawing illustrating a planned event recognized by an apparatus for providing a safety strategy in a vehicle according to one aspect of the present disclosure;
FIG. 4 is a drawing illustrating an unplanned event recognized by an apparatus for providing a safety strategy in a vehicle according to one aspect of the present disclosure;
FIG. 5 is a drawing illustrating an exemplary operation of an apparatus for providing a safety strategy in a vehicle according to one aspect of the present disclosure;
FIG. 6 is a drawing illustrating an exemplary operation of an apparatus for providing a safety strategy in a vehicle according to one aspect of the present disclosure;
FIG. 7 is a drawing illustrating an exemplary operation of an apparatus for providing a safety strategy in a vehicle according to one aspect of the present disclosure;
FIG. 8 is a flowchart illustrating a method for providing a safety strategy in a vehicle according to one aspect of the present disclosure;
FIG. 9 is a flowchart illustrating a method for providing a safety strategy in a vehicle according to one aspect of the present disclosure; and
FIG. 10 is a block diagram illustrating a configuration of a computing system according to one aspect of the present disclosure.

The drawings described herein are for illustration purposes only and are not intended to limit the scope of the present disclosure as defined by the appended claims.

### DETAILED DESCRIPTION

It should be understood that throughout the drawings, corresponding reference numerals indicate like or corresponding parts and features.

Hereinafter, the present invention will be described in detail with reference to the accompanying drawings. In adding reference denotations to elements of each drawing, although the same elements are displayed on a different drawing, it should be noted that the same elements have the same denotations. In addition, in describing one aspect of the present invention, if it is determined that a detailed description of related well-known configurations or functions blurs the gist of one aspect of the present invention, it will be omitted.

In describing elements of the present invention, the terms 1^{st}, 2^{nd}, first, second, A, B, (a), (b), and the like may be used herein. These terms are only used to distinguish one element from another element, but do not limit the corresponding elements irrespective of the nature, turn, or order of the corresponding elements. Unless otherwise defined, all terms used herein, including technical or scientific terms, have the same meanings as those generally understood by those skilled in the art to which the present invention pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

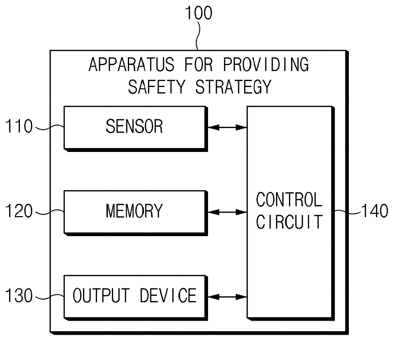

FIG. 1 is a block diagram illustrating a configuration of an apparatus for providing a safety strategy in a vehicle according to one aspect of the present invention.

Referring to FIG. 1, an apparatus 100 for providing a safety strategy according to the invention includes a sensor 110, a memory 120, an output device 130, and a control circuit 140. The apparatus 100 for providing a safety strategy in FIG. 1 may be a portion of an autonomous system and may be loaded into the vehicle.

The sensor 110 senses information associated with the outside of the vehicle. For example, the sensor 110 may sense information (e.g., a location, a speed, acceleration, and the like) associated with an external object located in front of, behind, or on either side of the vehicle. The sensor 110 may also sense information about the vehicle. For example, the sensor 110 may sense the location of the vehicle and motion (e.g., a speed, acceleration, a steering angle, and the like) of the vehicle.

The memory 120 stores road information. The road information may include, for example, a map or the like. The road information may include information about, for example, a type (e.g., a limited-access road, a normal road, or the like) of a road, a termination point of the road, a characteristic (e.g., a merging lane or the like) of a lane, and the like.

The output device 130 is configured to output a notification. The output device 130 may provide a notification sensuously recognizable by a driver of the vehicle. The output device 130 may include, for example, a display, a speaker, a vibration motor, and/or the like.

The control circuit 140 is configured to be electrically connected with the sensor 110, the memory 120, and the output device 130. The control circuit 140 may control the sensor 110, the memory 120, and the output device 130 and may perform a variety of data processing and various arithmetic operations. The control circuit 140 may be, for example, an electronic control unit (ECU), a micro controller unit (MCU), or a sub-controller, which is loaded into the vehicle.

According to one aspect, the control circuit 140 may perform autonomous control. For example, the control circuit 140 may perform driving assistance control on a limited-access road.

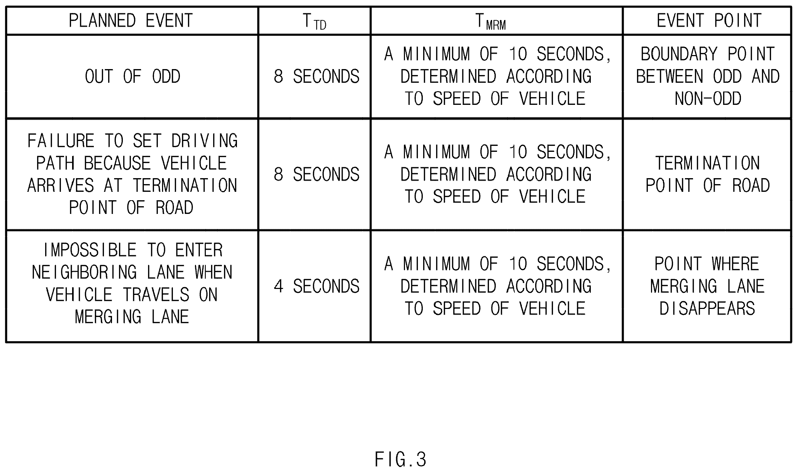

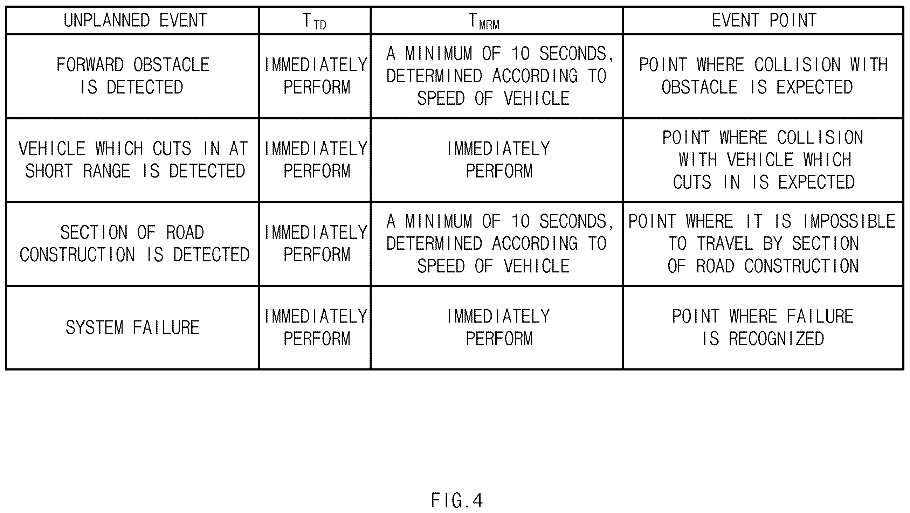

According to one aspect, the control circuit 140 may recognize an event associated with a critical situation of the vehicle based on at least a portion of sensing information or road information while performing autonomous control. The control circuit 140 may continue verifying a probability that a predefined critical situation will occur. The event may include, for example, a planned event and an unplanned event. According to one aspect, the planned event may be associated with a driving road or a driving lane of the vehicle. According to one aspect, the unplanned event may be associated with an external object or a failure of the autonomous system. A description will be given in detail below of an example of the planned event and the unplanned event with reference to FIGS. 3 and 4. While performing autonomous control, the control circuit 140 may control the vehicle as below in response to the critical situation.

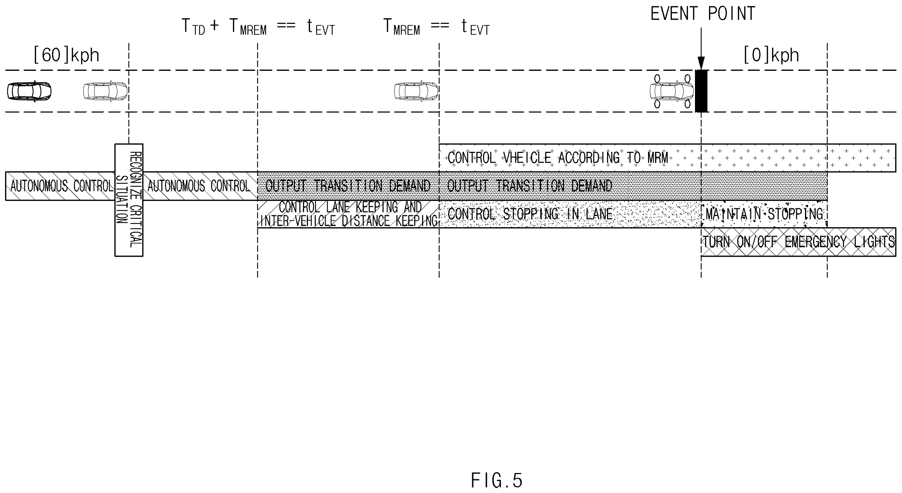

According to the invention, when the event is the planned event, the control circuit 140 is configured to maintain autonomous control and output a transition demand using the output device 130, thus controlling the vehicle according to a predetermined strategy for a critical situation. In detail, when the event is the planned event, the control circuit 140 may calculate an expected remaining time taken until the event occurs. When the expected remaining time is greater than the sum of a first time interval and a second time interval, the control circuit 140 may maintain autonomous control. When the expected remaining time is less than or equal to the sum of the first time interval and the second time interval and is greater than the second time interval, the control circuit 140 may output the transition demand. The transition demand may be referred to as a TD. When the expected remaining time is less than or equal to the second time interval, the control circuit 140 may control the vehicle according to a predetermined strategy. The predetermined strategy may be an MRM. The predetermined strategy may include various strategies, for example, stopping in lane, acceleration in lane, or movement toward a shoulder, or the like. While controlling the vehicle according to the predetermined strategy, the control circuit 140 may continue outputting the transition demand. For example, the first time interval may be preset. The second time interval may be calculated based on, for example, a speed of the vehicle. A description will be given in detail below of an exemplary control strategy corresponding to the planned event with reference to FIG. 5.

According to the invention, when the event is the unplanned event, the control circuit 140 is configured to immediately output a transition demand and control the vehicle according to a predetermined strategy. For example, when the event is the unplanned event, the control circuit 140 may immediately output the transition demand and may calculate an expected remaining time taken until the event occurs. When the expected remaining time is less than a specified time interval, the control circuit 140 may control the vehicle according to a predetermined strategy together with outputting the transition demand.

The specified time interval may be calculated based on, for example, a speed of the vehicle. For another example, when the event is the unplanned event, the control circuit 140 may control the vehicle according to a predetermined strategy together with immediately outputting a transition demand. When the event is an event where a surrounding vehicle cuts in or a failure of the autonomous system, the control circuit 140 may control the vehicle according to the predetermined strategy together with immediately outputting the transition demand. A description will be given in detail below of an exemplary control strategy corresponding to the unplanned event.

According to one aspect, when acceleration required to avoid a critical situation is greater in magnitude than a specified value, the control circuit 140 may control the vehicle according to another strategy for the critical situation. Because the speed of the vehicle is fast, when acceleration of greater than or equal to 3.7 m/s² is required to avoid the critical situation, the control circuit 140 may control the vehicle according to an emergency control strategy which is more advantageous for avoiding the critical situation than the above-mentioned predetermined strategy.

According to one aspect, after the transition demand is output, when an input by the driver of the vehicle is received, the control circuit 140 may hand over control authority to the driver. When an override by the driver is detected, the control circuit 140 may stop executing the above-mentioned control strategy and may immediately hand over control authority to the driver.

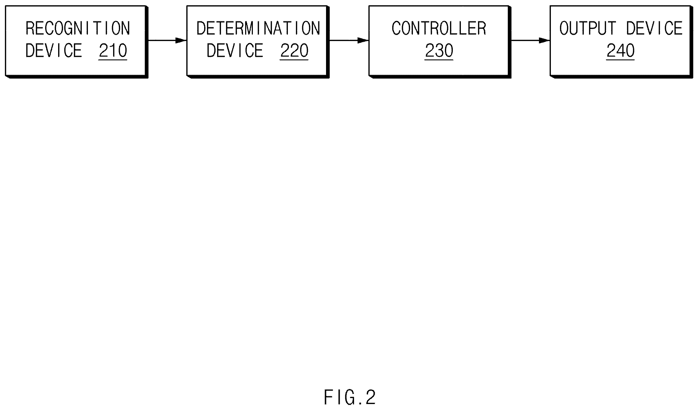

FIG. 2 is a block diagram illustrating a configuration of an apparatus for providing a safety strategy in a vehicle according to one aspect of the present invention.

Referring to FIG. 2, the apparatus for providing the safety strategy in the vehicle according to one aspect may include a recognition device 210, a determination device 220, a controller 230, and an output device 240.

The recognition device 210 may recognize a location, motion, and the like of the vehicle. For example, the recognition device 210 may include a global positioning system (GPS) module, an inertial measurement unit (IMU), and the like. The recognition device 210 may recognize surrounding circumstances on a road where the vehicle is traveling. For example, the recognition device 210 may include a camera, a radar, a light detection and ranging (LiDAR), and the like.

The determination device 220 may include a logic for precise positioning, which may determine a location of the vehicle. The determination device 220 may control the vehicle to travel along a destination or a most probable path (MPP) specified by a driver of the vehicle. The determination device 220 may determine whether it is desirable to perform an MRM, based on the recognized information.

The controller 230 may select a suitable MRM depending on the determined result and may control the vehicle according to the selected strategy. The controller 230 may control the vehicle in a manner described with reference to FIG. 1.

The output device 240 may notify the driver of a state of the system, a critical situation, and the like. The output device 240 may provide a transition demand (TD) to the driver.

FIG. 3 is a drawing illustrating a planned event recognized by an apparatus for providing a safety strategy in a vehicle according to one aspect of the present invention.

Referring to FIG. 3, the planned event may include when there is out of an operational design domain (ODD), when there is failure to set a driving path because the vehicle arrives at a termination point of a road, when it is impossible to enter a neighboring lane when the vehicle travels on a merging lane, and the like. The planned event may be an event, occurrence of which may be predicted when autonomous control is performed along a set path, irrespective of an external environment which is dynamically changed.

T_{TD} (a first time interval) may be a predetermined value. For example, T_{TD} may be set to 8 seconds in response to when there is out of the ODD and when the vehicle arrives at the termination point of the road. For another example, T_{TD} may be set to 4 seconds in response to when the vehicle travels on the merging lane. When the vehicle travels on the merging lane, because there is a high probability that the vehicle will enter a neighboring lane, T_{TD} may be set to be relatively low.

T_{MRM} (a second time interval) may be determined based on a speed of the vehicle. T_{MRM} may be set to a time when the vehicle may be stopped by specific deceleration. The faster the speed of the vehicle, longer T_{MRM} may be. Although the speed of the vehicle is sufficiently slow, T_{MRM} may be set to a minimum of 10 seconds or more.

When there is out of the ODD, an event point may be set to a boundary point between the ODD (e.g., a limited-access road) and a non-ODD (e.g., a general road, a tollgate, or the like). When the vehicle arrives at the termination point of the road, the event point may be set to the termination point of the road. When the vehicle travels on the merging lane, the event point may be set a point where the merging lane disappears.

FIG. 4 is a drawing illustrating an unplanned event recognized by an apparatus for providing a safety strategy in a vehicle according to one aspect of the present invention.

Referring to FIG. 4, the unplanned event may include when a forward obstacle is detected, when a vehicle which cuts in at a short range is detected, when a section of road construction is detected, when there is system failure (e.g., failure of hardware such as a sensor and an electronic control unit (ECU) and an error of software), and the like. The unplanned event may be an event which occurs by an external environment which is dynamically changed and may be an event which is unable to be predicted.

In case of the unplanned event, when there is a high probability that an emergency situation will occur, the vehicle may immediately generate a transition demand (TD) without considering T_{TD}.

When the forward obstacle is detected and when the section of road construction is detected, T_{MRM} (a specified time interval) may be determined based on a speed of the vehicle. T_{MRM} may be set to a time when the vehicle may be stopped by specific deceleration. The faster the speed of the vehicle, the longer the T_{MRM} may be. Although the vehicle is sufficiently slow in speed, T_{MRM} may be set to a minimum of 10 seconds or more.

When the vehicle which cuts in at the short range is detected and when there is the system failure, since there is a higher probability that an emergency situation will occur than the other unplanned events, the vehicle may immediately perform an MRM together with providing the TD without considering T_{MRM}.

When the forward obstacle is detected, an event point may be a point where a collision with the obstacle is predicted. When the vehicle which cuts in at the short range is detected, the event point may be a point where a collision with the vehicle which cuts in is expected. When the section of road construction is detected, the event point may be a point where it is impossible to travel due to the section of road construction. When there is the system failure, the event point may be a point where the failure is recognized.

FIG. 5 is a drawing illustrating an exemplary operation of an apparatus for providing a safety strategy in a vehicle according to one aspect of the present invention.

Referring to FIG. 5, the vehicle according to one aspect may perform autonomous control at a speed of 60 kph. While performing the autonomous control, the vehicle may recognize a critical situation. When the critical situation is a planned event, the vehicle may maintain the autonomous control until an expected remaining time t_{EVT} is the same as the sum of T_{TD} and T_{MRM}.

When the expected remaining time t_{EVT} is less than the sum of T_{TD} and T_{MRM}, the vehicle may output a TD until the expected remaining time t_{EVT} is the same as T_{MRM}. While outputting the TD, the vehicle may perform lane keeping control and inter-vehicle distance keeping control.

When the expected remaining time t_{EVT} is less than T_{MRM}, the vehicle may control itself. For example, the vehicle may control stopping in lane. While performing the MRM, the vehicle may continue outputting the TD.

The vehicle may stop before an event point and may turn on/off its emergency lights while maintaining the stopping.

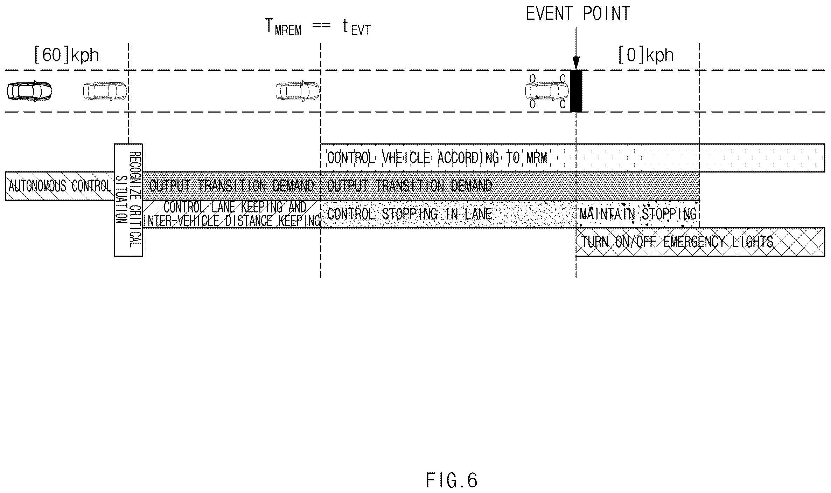

FIG. 6 is a drawing illustrating an exemplary operation of an apparatus for providing a safety strategy in a vehicle according to one aspect of the present invention.

Referring to FIG. 6, the vehicle according to one aspect may perform autonomous control at a speed of 60 kph. While performing the autonomous control, the vehicle may recognize a critical situation.

When the critical situation is an unplanned event, because the unplanned event has a shorter time to spare for correspondence than a planned evnt, the vehicle may immediately output a transition demand. The vehicle may output the transition demand until an expected remaining time t_{EVT} is the same as T_{MRM}. When outputting the transition demand, the vehicle may perform lane keeping control and inter-vehicle distance keeping control.

When the expected remaining time t_{EVT} is less than T_{MRM}, the vehicle may control itself according to an MRM. For example, the vehicle may control stopping in lane. While performing the MRM, the vehicle may continue outputting the transition demand.

The vehicle may stop before an event point and may turn on/off its emergency lights while maintaining the stopping.

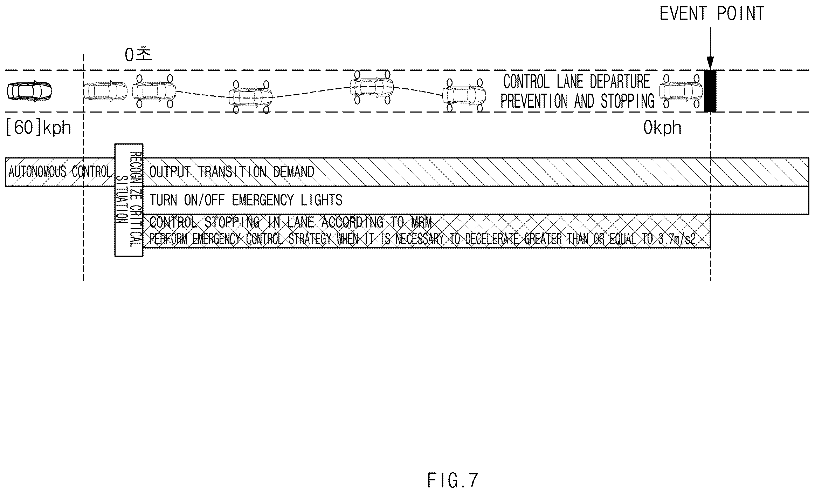

FIG. 7 is a drawing illustrating an exemplary operation of an apparatus for providing a safety strategy in a vehicle according to one aspect of the present invention.

Referring to FIG. 7, the vehicle according to one aspect may perform autonomous control at a speed of 60 kph. While performing the autonomous control, the vehicle may recognize a critical situation.

When the critical situation is an unplanned event, the vehicle may control itself according to an MRM or an emergency control strategy together with immediately outputting a transition demand. Simultaneously, the vehicle may turn on/off its emergency lights. For example, when an expected remaining time t_{EVT} is less than T_{MRM} at a time when the critical situation is recognized, when a vehicle which cuts in at a short range, that is, is during an unplanned event, is detected, when there is an emergency event such as system failure, or when deceleration greater than specified deceleration (e.g., 3.7 m/s²) is required, the vehicle may control itself according to the MRM or the emergency control strategy together with immediately outputting the transition demand. When the required deceleration is less in magnitude than a specified value, the vehicle may execute the MRM. When the required deceleration is greater in magnitude than or equal to the specified value, the vehicle may execute the emergency control strategy. The vehicle may control, for example, lane departure and stopping. Thus, the vehicle may stop before an event point.

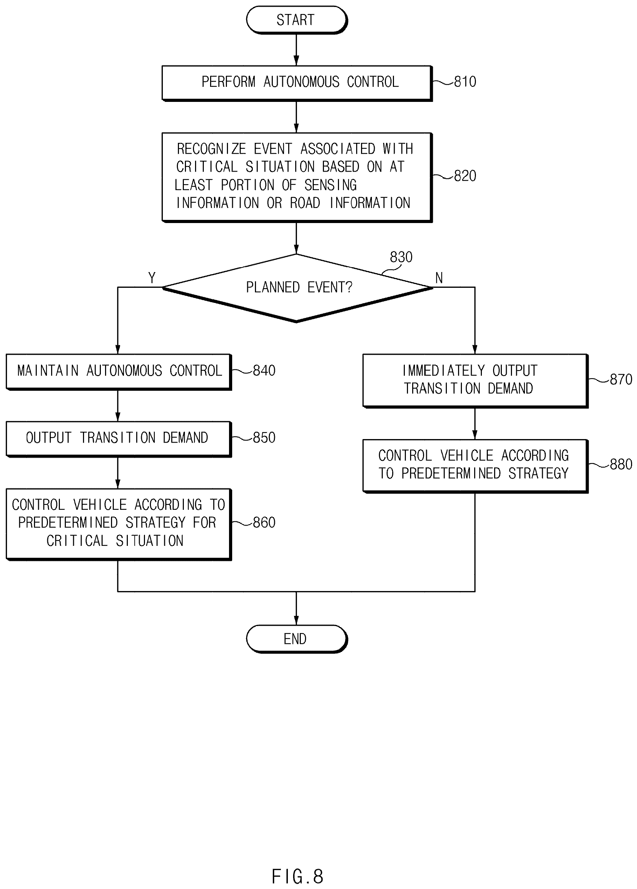

FIG. 8 is a flowchart illustrating a method for providing a safety strategy in a vehicle according to one aspect of the present invention.

Hereinafter, it is assumed that a vehicle including an apparatus 100 for providing a safety strategy in FIG. 1 performs a process of FIG. 8. Furthermore, in a description of FIG. 8, an operation described as being performed by the vehicle may be understood as being controlled by a control circuit 140 of the apparatus 100 for providing the safety strategy.

Referring to FIG. 8, in operation 810, the vehicle may perform autonomous control. The vehicle may detect a critical situation while performing the autonomous control and may provide a strategy corresponding to the critical situation as below.

In operation 820, the vehicle may recognize an event associated with the critical situation based on at least a portion of sensing information or road information. For example, the vehicle may continue monitoring an event associated with a predefined critical situation.

In operation 830, the vehicle may determine whether the recognized event corresponds to a planned event. For example, the vehicle may determine whether the recognized event is a planned event associated with a driving road or a driving lane or whether the recognized event is event is an unplanned event associated with an external object or a failure of its autonomous system.

When the event is the planned event, in operation 840, the vehicle may maintain the autonomous control. For example, the vehicle may maintain the autonomous control until a predetermined transition demand is initiated.

In operation 850, the vehicle may output a transition demand. For example, when the predetermined transition demand is initiated, the vehicle may output the transition demand to its driver.

In operation 860, the vehicle may control itself according to a predetermined strategy for the critical situation. For example, when an MRM is initiated, the vehicle may control stopping in lane.

When the event corresponds to the unplanned event, in operation 870, the vehicle may immediately output a transition demand. When the unplanned event has a shorter time to spare for correspondence than the planned event, the vehicle may immediately output the transition demand to the driver without considering the time when the transition demand is initiated.

In operation 880, the vehicle may control itself according to a predetermined strategy for the critical situation. For example, when the MRM is initiated, the vehicle may control stopping in lane concurrently with outputting the transition demand.

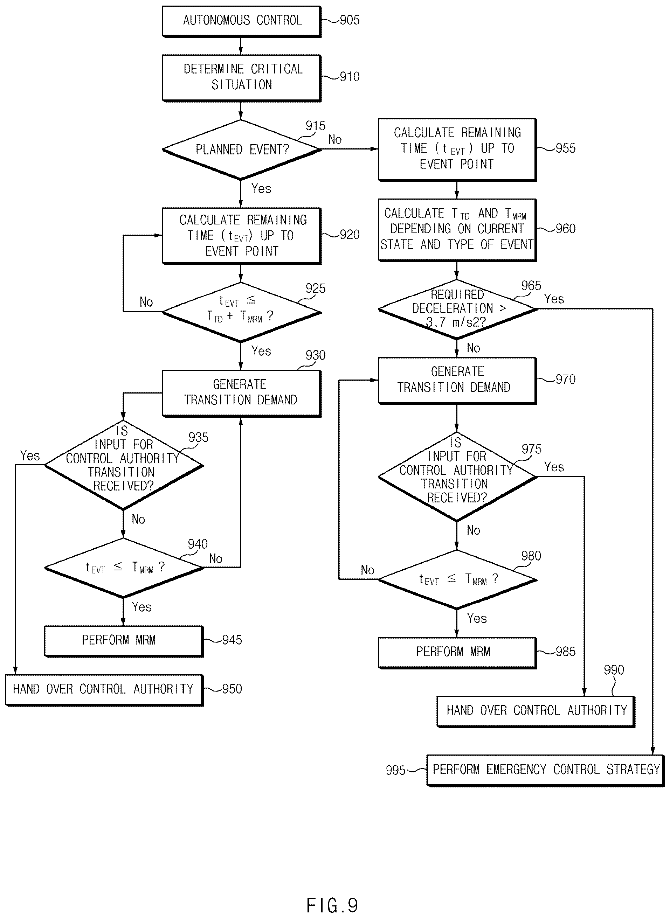

FIG. 9 is a flowchart illustrating a method for providing a safety strategy in a vehicle according to one aspect of the present invention.

Hereinafter, it is assumed that a vehicle including an apparatus 100 for providing a safety strategy in FIG. 1 performs a process of FIG. 9. Furthermore, in a description of FIG. 9, an operation described as being performed by the vehicle may be undrstood as being controlled by a control circuit 140 of the apparatus 100 for providing the safety strategy.

Referring to FIG. 9, in operation 905, the vehicle may perform autonomous control. In operation 910, the vehicle may determine a critical situation. In operation 915, the vehicle may determine whether the critical situation corresponds to a planned event.

When the critical situation corresponds to the planned event, in operation 920, the vehicle may calculate an expected remaining time t_{EVT} up to an event point. In operation 925, the vehicle may determine whether the expected remaining time t_{EVT} is less than or equal to the sum of a time T_{TD} required for a transition demand (TD) before an MRM and an expected time T_{MRM} taken for the MRM. When the expected remaining time t_{EVT} is less than or equal to the sum of T_{TD} and T_{MRM} over time, in operation 930, the vehicle may generate a TD. In operation 935, the vehicle may determine whether an input for control authority transition by a driver is received. When the input is not received, in operation 940, the vehicle may determine whether the expected remaining time t_{EVT} is less than or equal to T_{MRM}. When the expected remaining time t_{EVT} is less than or equal to T_{MRM} over time, in operation 945, the vehicle may perform an MRM. When the input for the control authority transition is received before the MRM is performed, in operation 950, the vehicle may hand over control authority to the driver.

When the critical situation corresponds to an unplanned event, in operation 955, the vehicle may calculate an expected remaining time t_{EVT} up to an event point. In operation 960, the vehicle may calculate T_{TD} and T_{MRM} based on a current state and a type of the event. In operation 965, the vehicle may determine whether deceleration required to avoid risk is greater than a specified value (e.g., 3.7 m/s²). When the deceleration is less than or equal to the specified value, in operation 970, the vehicle may generate a TD. In operation 975, the vehicle may determine whether an input for control authority transition by the driver is received. When the input is not received, in operation 980, the vehicle may determine whether the expected remaining time t_{EVT} is less than or equal to T_{MRM}. When the expected remaining time t_{EVT} is less than or equal to T_{MRM} over time, in operation 985, the vehicle may perform an MRM. When the input for the control authority transition is received before the MRM is performed, in operation 990, the vehicle may hand over control authority to the driver. When the deceleration is greater than the specified value, in operation 995, the vehicle may perform emergency control strategy.

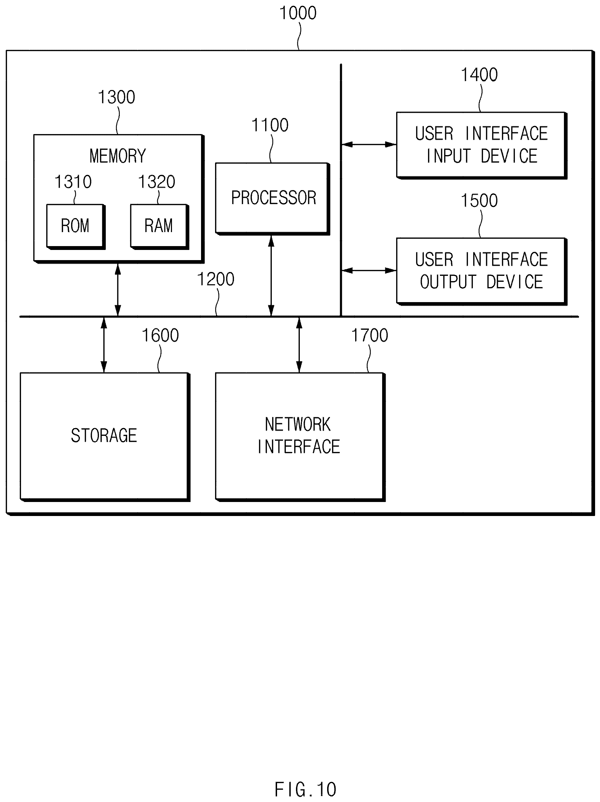

FIG. 10 is a block diagram illustrating a configuration of a computing system according to one aspect of the present invention.

Referring to FIG. 10, a computing system 1000 may include at least one processor 1100, a memory 1300, a user interface input device 1400, a user interface output device 1500, a storage 1600, and a network interface 1700, which are connected with each other via a bus 1200.

The processor 1100 may be a central processing unit (CPU) or a semiconductor device for performing processing of instructions stored in the memory 1300 and/or the storage 1600. Each of the memory 1300 and the storage 1600 may include various types of volatile or non-volatile storage media. For example, the memory 1300 may include a read only memory (ROM) and a random access memory (RAM).

Thus, the operations of the methods or algorithms described in connection with the specification may be directly implemented with a hardware module, a software module, or combinations thereof, executed by the processor 1100. The software module may reside on a storage medium (i.e., the memory 1300 and/or the storage 1600) such as a RAM, a flash memory, a ROM, an erasable and programmable ROM (EPROM), an electrically EPROM (EEPROM), a register, a hard disc, a removable disc, or a compact disc-ROM (CD-ROM). An exemplary storage medium may be coupled to the processor 1100. The processor 1100 may read out information from the storage medium and may write information in the storage medium. Alternatively, the storage medium may be integrated with the processor 1100. The processor and storage medium may reside in an application specific integrated circuit (ASIC). The ASIC may reside in a user terminal. Alternatively, the processor and storage medium may reside as a separate component of the user terminal.

The apparatus for providing the safety strategy in the vehicle according to one aspect of the present disclosure may enhance the safety of a driver through a correspondence strategy suitable for a situation by classifying an event associated with the critical situation of an autonomous vehicle as a planned event or an unplanned event and providing the correspondence strategy.

In addition, various effects directly or indirectly ascertained through the present invention may b provided.

## Claims

1. An apparatus for providing a safety strategy (100) in a vehicle, the apparatus (100) comprising:
a sensor (110) configured to obtain sensing information about an outside of the vehicle;
a memory (120) storing road information;
an output device (130) configured to output a notification; and
a control circuit (140) configured to be electrically connected with the sensor (110), the memory (120), and the output device (130),
wherein the control circuit (140) is configured to:
recognize an event associated with a critical situation of the vehicle based on at least a portion of the sensing information or the road information, while performing autonomous control; and
when the event is a planned event, maintain the autonomous control, output a transition demand using the output device (130), and control the vehicle according to a predetermined strategy for the critical situation; and
when the event is an unplanned event, output the transition demand and control the vehicle according to the predetermined strategy.

2. The apparatus (100) of claim 1, wherein the planned event is associated with a driving road or a driving lane of the vehicle.

3. The apparatus (100) of claim 1 or 2, wherein the unplanned event is associated with an external object or a failure of an autonomous system of the vehicle.

4. The apparatus (100) of claim 1, wherein the control circuit (140) is configured to:
calculate an expected remaining time taken until the event occurs, when the event is the planned event;
maintain the autonomous control, when the expected remaining time is greater than a sum of a first time interval and a second time interval;
output the transition demand, when the expected remaining time is less than or equal to the sum of the first time interval and the second time interval and is greater than the second time interval; and
control the vehicle according to the predetermined strategy, when the expected remaining time is less than or equal to the second time interval.

5. The apparatus (100) of claim 4, wherein the first time interval is preset.

6. The apparatus (100) of claim 4, wherein the second time interval is calculated based on a speed of the vehicle.

7. The apparatus (100) of one of claims 1 to 6, wherein the control circuit (140) is configured to:
when the event is an unplanned event, immediately output the transition demand and calculate an expected remaining time taken until the event occurs; and
control the vehicle according to the predetermined strategy together with outputting the transition demand, when the expected remaining time is less than a specified time interval.

8. The apparatus (100) of claim 7, wherein the specified time interval is calculated based on a speed of the vehicle.

9. The apparatus (100) of one of claims 1 to 8, wherein the control circuit (140) is configured to:
immediately control the vehicle according to the predetermined strategy together with outputting the transition demand, when the event is the unplanned event.

10. The apparatus (100) of one of claims 1 to 9, wherein the control circuit (140) is configured to:
immediately control the vehicle according to the predetermined strategy together with outputting the transition demand, when the event is an event where a surrounding vehicle cuts in.

11. The apparatus (100) of one of claims 1 to 10, wherein the control circuit (140) is configured to:
immediately control the vehicle according to the predetermined strategy together with outputting the transition demand, when the event is a failure of an autonomous system.

12. The apparatus (100) of one of claims 1 to 11, wherein the control circuit (140) is configured to:
control the vehicle according to another strategy for the critical situation, when deceleration required to avoid the critical situation is greater in magnitude than a specified value.

13. The apparatus (100) of one of claims 1 to 12, wherein the control circuit (140) is configured to:
hand over control authority to a driver of the vehicle, when an input by the driver is received after the transition demand is output.

14. The apparatus (100) of one of claims 1 to 13, wherein the predetermined strategy comprises stopping in lane, deceleration in lane, or movement toward a shoulder.

15. A method for providing a safety strategy in a vehicle, the method comprising:
recognizing (820), by a control circuit (140), an event associated with a critical situation of the vehicle based on at least a portion of sensing information from a sensor (110) in electrical connection with the control circuit (140) or road information stored in a memory (120) in electrical connection with the control circuit (140), while performing autonomous control; and
when the event is a planned event, maintaining (840), by the control circuit (140), the autonomous control; outputting (850), by an output device (130), a transition demand; and, by the control circuit (140), controlling (860) the vehicle according to a predetermined strategy for the critical situation; and
when the event is an unplanned event, outputting (870), by the output device (130), the transition demand; and controlling (880), by the control circuit (140), the vehicle according to the predetermined strategy.

## Patentansprüche

1. Einrichtung zum Bereitstellen einer Sicherheitsstrategie (100) in einem Fahrzeug, wobei die Einrichtung (100) umfasst:
einen Sensor (110), der konfiguriert ist, Erfassungsinformationen über eine Außenseite des Fahrzeugs zu erhalten;
einen Speicher (120), der Straßeninformationen speichert;
eine Ausgabevorrichtung (130), die konfiguriert ist, eine Benachrichtigung auszugeben; und
eine Steuerschaltung (140), die konfiguriert ist, elektrisch mit dem Sensor (110), dem Speicher (120) und der Ausgabevorrichtung (130) verbunden zu sein,
wobei die Steuerschaltung (140) konfiguriert ist zum:
Erkennen eines Ereignisses, das mit einer kritischen Situation des Fahrzeugs verknüpft ist, basierend auf mindestens einem Teil der Erfassungsinformationen oder der Straßeninformationen, während autonome Steuerung durchgeführt wird; und
wenn das Ereignis ein geplantes Ereignis ist, Aufrechterhalten der autonomen Steuerung, Ausgeben einer Übergangsanforderung unter Verwendung der Ausgabevorrichtung (130) und Steuern des Fahrzeugs gemäß einer vorbestimmten Strategie für die kritische Situation; und
wenn das Ereignis ein ungeplantes Ereignis ist, Ausgeben der Übergangsanforderung und Steuern des Fahrzeugs gemäß der vorbestimmten Strategie.

2. Einrichtung (100) nach Anspruch 1, wobei das geplante Ereignis mit einer Fahrstraße oder einer Fahrspur des Fahrzeugs verknüpft ist.

3. Einrichtung (100) nach Anspruch 1 oder 2, wobei das ungeplante Ereignis mit einem externen Objekt oder einem Versagen eines autonomen Systems des Fahrzeugs verknüpft ist.

4. Einrichtung (100) nach Anspruch 1, wobei die Steuerschaltung (140) konfiguriert ist zum:
Berechnen einer erwarteten verbleibenden Zeit bis zum Eintritt des Ereignisses, wenn das Ereignis das geplante Ereignis ist;
Aufrechterhalten der autonomen Steuerung, wenn die erwartete verbleibende Zeit größer als eine Summe eines ersten Zeitintervalls und eines zweiten Zeitintervalls ist;
Ausgeben der Übergangsanforderung, wenn die erwartete verbleibende Zeit kleiner als oder gleich der Summe des ersten Zeitintervalls und des zweiten Zeitintervalls und größer als das zweite Zeitintervall ist; und
Steuern des Fahrzeugs gemäß der vorbestimmten Strategie, wenn die erwartete verbleibende Zeit kleiner als oder gleich dem zweiten Zeitintervall ist.

5. Einrichtung (100) nach Anspruch 4, wobei das erste Zeitintervall vorab eingestellt wird.

6. Einrichtung (100) nach Anspruch 4, wobei das zweite Zeitintervall basierend auf einer Geschwindigkeit des Fahrzeugs berechnet wird.

7. Einrichtung (100) nach einem der Ansprüche 1 bis 6, wobei die Steuerschaltung (140) konfiguriert ist zum:
wenn das Ereignis ein ungeplantes Ereignis ist, unmittelbaren Ausgeben der Übergangsanforderung und Berechnen einer erwarteten verbleibenden Zeit bis zum Eintritt des Ereignisses; und
Steuern des Fahrzeugs gemäß der vorbestimmten Strategie gemeinsam mit Ausgeben der Übergangsanforderung, wenn die erwartete verbleibende Zeit kleiner als ein spezifiziertes Zeitintervall ist.

8. Einrichtung (100) nach Anspruch 7, wobei das spezifizierte Zeitintervall basierend auf einer Geschwindigkeit des Fahrzeugs berechnet wird.

9. Einrichtung (100) nach einem der Ansprüche 1 bis 8, wobei die Steuerschaltung (140) konfiguriert ist zum:
unmittelbaren Steuern des Fahrzeugs gemäß der vorbestimmten Strategie gemeinsam mit Ausgeben der Übergangsanforderung, wenn das Ereignis das ungeplante Ereignis ist.

10. Einrichtung (100) nach einem der Ansprüche 1 bis 9, wobei die Steuerschaltung (140) konfiguriert ist zum:
unmittelbaren Steuern des Fahrzeugs gemäß der vorbestimmten Strategie gemeinsam mit Ausgeben der Übergangsanforderung, wenn das Ereignis ein Ereignis ist, wo ein Fahrzeug in der Umgebung einschert.

11. Einrichtung (100) nach einem der Ansprüche 1 bis 10, wobei die Steuerschaltung (140) konfiguriert ist zum:
unmittelbaren Steuern des Fahrzeugs gemäß der vorbestimmten Strategie gemeinsam mit Ausgeben der Übergangsanforderung, wenn das Ereignis ein Versagen eines autonomen Systems ist.

12. Einrichtung (100) nach einem der Ansprüche 1 bis 11, wobei die Steuerschaltung (140) konfiguriert ist zum:
Steuern des Fahrzeugs gemäß einer anderen Strategie für die kritische Situation, wenn Bremsung, die erforderlich ist, um die kritische Situation zu vermeiden, stärker ist als ein spezifizierter Wert.

13. Einrichtung (100) nach einem der Ansprüche 1 bis 12, wobei die Steuerschaltung (140) konfiguriert ist zum:
Übergeben von Steuerungsautorität an einen Fahrer des Fahrzeugs, wenn eine Eingabe von dem Fahrer empfangen wird, nachdem die Übergangsanforderung ausgegeben worden ist.

14. Einrichtung (100) nach einem der Ansprüche 1 bis 13, wobei die vorbestimmte Strategie Stoppen in Spur, Bremsen in Spur oder Bewegung zu einem Seitenstreifen umfasst.

15. Verfahren zum Bereitstellen einer Sicherheitsstrategie in einem Fahrzeug, wobei das Verfahren umfasst:
Erkennen (820), durch eine Steuerschaltung (140), eines Ereignisses, das mit einer kritischen Situation des Fahrzeugs verknüpft ist, basierend auf mindestens einem Teil von Erfassungsinformationen von einem Sensor (110) in elektrischer Verbindung mit der Steuerschaltung (140) oder Straßeninformationen, die in einem Speicher (120) in elektrischer Verbindung mit der Steuerschaltung (140) gespeichert sind, während autonome Steuerung durchgeführt wird; und
wenn das Ereignis ein geplantes Ereignis ist, Aufrechterhalten (840), durch die Steuerschaltung (140), der autonomen Steuerung; Ausgeben (850), durch eine Ausgabevorrichtung (130), einer Übergangsanforderung; und, durch die Steuerschaltung (140), Steuern (860) des Fahrzeugs gemäß einer vorbestimmten Strategie für die kritische Situation; und
wenn das Ereignis ein ungeplantes Ereignis ist, Ausgeben (870), durch die Ausgabevorrichtung (130), der Übergangsanforderung; und Steuern (880), durch die Steuerschaltung (140), des Fahrzeugs gemäß der vorbestimmten Strategie.

## Revendications

1. Appareil pour fournir une stratégie de sécurité (100) dans un véhicule, l'appareil (100) comprenant :
un capteur (110) conçu pour obtenir des informations de détection concernant un extérieur du véhicule ;
une mémoire (120) stockant des informations routières ;
un dispositif de délivrance en sortie (130) conçu pour délivrer en sortie une notification ; et
un circuit de commande (140) conçu pour être connecté électriquement au capteur (110), à la mémoire (120) et au dispositif de délivrance en sortie (130),
dans lequel le circuit de commande (140) est conçu pour :
reconnaître un événement associé à une situation critique du véhicule sur la base d'au moins une partie des informations de détection ou des informations routières, tout en effectuant une commande autonome ; et
lorsque l'événement est un événement planifié, maintenir la commande autonome, délivrer en sortie une demande de transition à l'aide du dispositif de délivrance en sortie (130), et commander le véhicule en fonction d'une stratégie prédéterminée pour la situation critique ; et
lorsque l'événement est un événement non planifié, délivrer en sortie la demande de transition et commander le véhicule en fonction de la stratégie prédéterminée.

2. Appareil (100) selon la revendication 1, dans lequel l'événement planifié est associé à une route de conduite ou une voie de conduite du véhicule.

3. Appareil (100) selon la revendication 1 ou 2, dans lequel l'événement non planifié est associé à un objet externe ou à une défaillance d'un système autonome du véhicule.

4. Appareil (100) selon la revendication 1, dans lequel le circuit de commande (140) est conçu pour :
calculer un temps restant prévu pris jusqu'à ce que l'événement survienne, lorsque l'événement est l'événement planifié ;
maintenir la commande autonome, lorsque le temps restant prévu est supérieur à une somme d'un premier intervalle de temps et d'un second intervalle de temps ;
délivrer en sortie la demande de transition, lorsque le temps restant prévu est inférieur ou égal à la somme du premier intervalle de temps et du second intervalle de temps et est supérieur au second intervalle de temps ; et
commander le véhicule en fonction de la stratégie prédéterminée, lorsque le temps restant prévu est inférieur ou égal au second intervalle de temps.

5. Appareil (100) selon la revendication 4, dans lequel le premier intervalle de temps est prédéfini.

6. Appareil (100) selon la revendication 4, dans lequel le second intervalle de temps est calculé sur la base d'une vitesse du véhicule.

7. Appareil (100) selon l'une des revendications 1 à 6, dans lequel le circuit de commande (140) est conçu pour :
lorsque l'événement est un événement non planifié, délivrer immédiatement en sortie la demande de transition et calculer un temps restant prévu près jusqu'à ce que l'événement survienne ; et
commander le véhicule en fonction de la stratégie prédéterminée avec la délivrance en sortie de la demande de transition, lorsque le temps restant prévu est inférieur à un intervalle de temps spécifié.

8. Appareil (100) selon la revendication 7, dans lequel l'intervalle de temps spécifié est calculé sur la base d'une vitesse du véhicule.

9. Appareil (100) selon l'une des revendications 1 à 8, dans lequel le circuit de commande (140) est conçu pour :
commander immédiatement le véhicule en fonction de la stratégie prédéterminée avec la délivrance en sortie de la demande de transition, lorsque l'événement est l'événement non planifié.

10. Appareil (100) selon l'une des revendications 1 à 9, dans lequel le circuit de commande (140) est conçu pour :
commander immédiatement le véhicule en fonction de la stratégie prédéterminée avec la délivrance en sortie de la demande de transition, lorsque l'événement est un événement où un véhicule environnant fait une queue de poisson.

11. Appareil (100) selon l'une des revendications 1 à 10, dans lequel le circuit de commande (140) est conçu pour :
commander immédiatement le véhicule en fonction de la stratégie prédéterminée avec la délivrance en sortie de la demande de transition, lorsque l'événement est une défaillance d'un système autonome.

12. Appareil (100) selon l'une des revendications 1 à 11, dans lequel le circuit de commande (140) est conçu pour :
commander le véhicule en fonction d'une autre stratégie pour la situation critique, quand un ralentissement nécessaire pour éviter la situation critique est supérieur en amplitude à une valeur spécifiée.

13. Appareil (100) selon l'une des revendications 1 à 12, dans lequel le circuit de commande (140) est conçu pour :
transférer une autorité de commande à un conducteur du véhicule, quand une entrée par le conducteur est reçue après que la demande de transition a été délivrée en sortie.

14. Appareil (100) selon l'une des revendications 1 à 13, dans lequel la stratégie prédéterminée comprend un arrêt dans la voie, un ralentissement dans la voie, ou un déplacement vers un accotement.

15. Procédé pour fournir une stratégie de sécurité dans un véhicule, le procédé comprenant :
une reconnaissance (820), par un circuit de commande (140), d'un événement associé à une situation critique du véhicule sur la base d'au moins une partie d'informations de détection provenant d'un capteur (110) en connexion électrique avec le circuit de commande (140) ou d'informations routières stockées dans une mémoire (120) en connexion électrique avec le circuit de commande (140), tout en effectuant une commande autonome ; et
lorsque l'événement est un événement planifié, un maintien (840), par le circuit de commande (140), de la commande autonome ; une délivrance en sortie (850), par un dispositif de délivrance en sortie (130), d'une demande de transition ; et, par le circuit de commande (140), une commande (860) du véhicule en fonction d'une stratégie prédéterminée pour la situation critique ; et
lorsque l'événement est un événement non planifié, une délivrance en sortie (870), par le dispositif de délivrance en sortie (130), de la demande de transition ; et une commande (880), par le circuit de commande (140), du véhicule en fonction de la stratégie prédéterminée.
